# EUROPÄISCHE PATENTSCHRIFT

(11) **EP 3 551 687 B1**
(45) Veröffentlichungstag und Bekanntmachung des Hinweises auf die Patenterteilung: **24.01.2024**
(21) Anmeldenummer: 17816395.2
(22) Anmeldetag: 07.12.2017
(51) Int. Cl.: C08J 3/22, C08K 13/02, C08K 5/00, C08K 5/098, C08K 5/26

(54) **VERFAHREN ZUR HERSTELLUNG EINER STABILISATORZUSAMMENSETZUNG UND DAMIT HERGESTELLTE STABILISATORZUSAMMENSETZUNG**
PROCESS FOR THE PREPARATION OF A STABILIZER COMPOSITION AND STABILIZER COMPOSITION PREPARED THEREBY
PROCEDE POUR LA PREPARATION D'UNE COMPOSITION DE STABILISANTS ET COMPOSITION DE STABILISANTS PREPAREE PAR CE PROCEDE

(30) Priorität: 12.12.2016 AT 511272016
(43) Veröffentlichungstag der Anmeldung: 16.10.2019
(73) Patentinhaber: Akdeniz Chemson Additives AG, 9601 Arnoldstein (AT)
(72) Erfinder: HECHER, Michael, 6842 Koblach (AT); MÖDRITSCHER, Hubert, 9601 Arnoldstein (AT); SCHMID, Günther, 9500 Villach (AT)
(74) Vertreter: Wirnsberger & Lerchbaum Patentanwälte OG
(86) Internationale Anmeldenummer: PCT/AT2017/060328
(87) Internationale Veröffentlichungsnummer: WO 2018/107193

(56) Entgegenhaltungen:
- DE-A1- 19 627 258
- DE-A1- 19 755 561
- DE-A1-102004 024 891

## Beschreibung

Die Erfindung betrifft ein Verfahren zur Herstellung einer Stabilisatorzusammensetzung für ein Polymer, wobei eine Carbonsäure mit zumindest einer Metallverbindung wie zumindest einem Metallhydroxid und/oder zumindest einem Metalloxid und/oder zumindest einem Metallcarbonat unter Bildung eines Metallcarboxylates der Carbonsäure umgesetzt wird.

Des Weiteren betrifft die Erfindung eine Stabilisatorzusammensetzung für ein Polymer.

Polymere werden üblicherweise mit Stabilisatoren versetzt, um eine effiziente Verarbeitung zu ermöglichen. Da ein Polymer im Einsatz häufig einer Vielzahl von Einflüssen und Belastungen ausgesetzt ist, sind in der Regel mehrere Komponenten erforderlich, die bei der Herstellung der Stabilisatorzusammensetzung gemeinsam oder sequenziell zugeführt werden.

Bei der Verarbeitung von Polymeren haben sich Stabilisatorzusammensetzungen bewährt, die gebrauchsfertig eingesetzt werden können (sogenannte "one-packs").

Gebrauchsfertige Stabilisatorzusammensetzungen umfassen oft Metallcarboxylate, also Reaktionsprodukte von Carbonsäuren, vorzugsweise Fettsäuren, mit Metallhydroxiden und/oder Metalloxiden und/oder Metallcarbonaten, z. B. basischen Metallcarbonaten, und weitere Zusatzstoffe wie Zeolithe, Hydrotalcite, Kreide, Pigmente, weitere Co-Stabilisatoren, Antioxidantien und dergleichen. Eine konkrete Abstimmung der Zusammensetzung wird dabei mit Fokus auf das oder die beabsichtigten Einsatzgebiete des Polymers ausgerichtet.

Für eine Stabilisatorzusammensetzung in gebrauchsfertiger Form bzw. einen one-pack ist es erforderlich, die einzelnen Komponenten zu mischen. Gemäß dem Stand der Technik wird hierfür in einem ersten Schritt zunächst eine Umsetzung von Fettsäuren mit Metallhydroxiden und/oder Metalloxiden und/oder Metallcarbonaten zur Bildung der gewünschten Metallseifen bzw. Metallcarboxylate durchgeführt. Beispielsweise finden neben den gebräuchlichen Carbonsäuren wie Laurinsäure oder Stearinsäure als Oxide beispielsweise Oxide der Übergangsmetalle wie Zinkoxid (ZnO) und/oder Alkali- und/oder Erdalkalioxide und/oder -hydroxide wie Calciumhydroxid [Ca(OH)₂] Anwendung. Es kann auch Carbonsäure oder die Metallverbindung im Überschuss zugegeben werden, sodass saure oder basische Metallcarboxylate entstehen. Nach dieser Reaktion in einem ersten Schritt werden in einem Batch-Verfahren die weiteren Komponenten je nach Bedarf beigemischt und eingearbeitet, um letztlich die Stabilisatorzusammensetzung zu erstellen.

Bei der Herstellung von gebrauchsfertigen Stabilisatorzusammensetzungen mit Metallcarboxylaten von Carbonsäuren ist eine Verfahrensführung im Batch-Verfahren deswegen erforderlich, weil die Umsetzung von Carbonsäuren mit den Metalloxiden und/oder Metallhydroxiden vollständig abgeschlossen sein soll. Ein unvollständiger oder variierender Reaktionsumsatz führt letztlich zu einer unerwünschten oder von der Charge abhängigen abweichenden Rheologie bei der Polymerverarbeitung, was nicht erwünscht ist. Da aber dieser erste Schritt der Umsetzung der Carbonsäure und die anschließende Beimengung weiterer Komponenten im Batch-Verfahren erfolgen muss, ergibt sich insgesamt ein zeitaufwendiger Prozess mit einem beschränkten Massendurchsatz.

Hier setzt die Erfindung an. Aufgabe der Erfindung ist es, ein Verfahren der eingangs genannten Art anzugeben, mit dem ein höherer Durchsatz ohne Einbuße in Bezug auf eine Produktgüte erreichbar ist.

Ein weiteres Ziel ist es, eine verbesserte Stabilisatorzusammensetzung anzugeben.

Die verfahrensmäßige Aufgabe der Erfindung wird gelöst, wenn bei einem Verfahren der eingangs genannten Art die Umsetzung der Carbonsäure, insbesondere einer Fettsäure, mit der Metallverbindung kontinuierlich in einem Extruder unter Austritt von entstehendem Reaktionswasser aus dem Extruder durchgeführt wird.

Ein mit einem erfindungsgemäßen Verfahren erzielter Vorteil liegt darin, dass bei Austritt von entstehendem Reaktionswasser aus dem Extruder das Verfahren in diesem und damit der Prozess im Gesamten kontinuierlich gefahren werden kann. Dabei ist es möglich, durch eine Länge des Extruders bzw. durch ein freies Volumen in diesem die erforderliche Reaktionszeit für eine insbesondere vollständige Reaktion so abzustimmen, dass kein oder nur mehr ein gezielt vorbestimmter, reproduzierbarer Restwassergehalt im Produkt vorliegt. Dies lässt sich ohne Weiteres einstellen, sobald erkannt ist, dass der Extruder erfindungsgemäß mit Öffnungen zu gestalten ist, also entstehendes Reaktionswasser die Möglichkeit hat, zu entweichen.

Eine kontinuierliche Verfahrensführung erfordert nicht nur weniger Kontrolle und damit Personalaufwand als ein Batch-Verfahren, sondern bringt insbesondere auch den Vorteil, dass eine pro Zeiteinheit herstellbare bzw. ausbringbare Masse an Stabilisatorzusammensetzung deutlich höher ist und beispielsweise im Vergleich mit einem Batch-Verfahren ein Vielfaches betragen kann. Es ergibt sich somit ein hochproduktives Verfahren, das zu einem exzellenten Produkt führt, da im Extruder eine innige Durchmischung zunächst der Edukte und später der daraus entstehenden Produkte erfolgt und im Anschluss noch weitere Stabilisatorkomponenten zugemischt werden können, sofern erforderlich.

Als Metallverbindung können beliebige Verbindungen eingesetzt werden, die mit der zumindest einen Carbonsäure zu einem Carboxylat reagieren. Üblicherweise erfolgt die Umsetzung mit zumindest einem Metallhydroxid und/oder zumindest einem Metalloxid und/oder zumindest einem Metallcarbonat, wobei insbesondere auch basische Metallcarbonate geeignet sind.

Als Carbonsäuren sind aliphatische oder aromatische, mono- und/oder di- und/oder polyCarbonsäuren, insbesondere Fettsäuren, die mit Kohlenstoffketten mit 2 bis zu 30 Kohlenstoffen aufgebaut sind, die linear oder verzweigt sein können und die optional teilweise auch mit Hydroxylgruppen und Aminogruppen substituiert sein können, zu verstehen.

Die Kationen, die zu den Metallseifen bzw. Metallcarboxylaten reagieren, werden im Sinne der Erfindung als Metallhydroxid und/oder Metalloxid und/oder Metallcarbonaten und/oder basischen Metallcarbonat zugegeben, wobei auch mehrere unterschiedliche Metalloxide, -hydroxide, -carbonate und/oder basische Metallcarbonate zugegeben werden können.

Die Kationen können aus den Gruppen der Alkali- und/oder Erdalkalimetalle, Zink, Aluminium, Zinn und/oder aus der Gruppe der Seltenerdmetalle oder dergleichen sein.

Die Metallverbindungen können als Mischung mehrerer unterschiedlicher Metallverbindungen oder bevorzugt sequenziell zugegeben werden.

Es ist möglich, dass das Reaktionswasser aktiv aus dem Extruder abgezogen wird. Hierfür kann beispielsweise vorgesehen sein, dass an einer oder mehreren Stellen des Extruders ein Unterdruck angelegt wird, durch welchen das Wasser aus dem Extruder abgezogen wird. Insbesondere kann ein Vakuum Anwendung finden, beispielsweise ein Wasserstrahlvakuum. Bevorzugt ist es jedoch, wenn das Reaktionswasser entweichen gelassen wird. Durch ein passives Entweichen des Reaktionswassers ohne zusätzliche Maßnahmen kann die Reaktionsmischung bei Atmosphärendruck bearbeitet bzw. gefahren werden. Dies bringt neben einer apparativ einfachen Verfahrensführung auch den Vorteil mit sich, dass eine Schaumbildung, welche bei der Umsetzung der Carbonsäuren mit Metallhydroxiden und/oder Metalloxiden auftreten kann, nicht aktiv gefördert wird.

Der Austritt des Reaktionswassers kann grundsätzlich an beliebigen Stellen des Extruders erfolgen bzw. aktiv gefördert werden. Bevorzugt ist es, dass der Austritt des Reaktionswassers durch Öffnungen des Extruders erfolgt. Die Öffnungen können an einer Außenseite des Extruders entlang des Materialflusses angeordnet sein. Es handelt sich somit in einer bevorzugten Variante um einen sogenannten offenen Extruder, aus dem das Reaktionswasser auf einfache Weise und ohne zusätzliche Maßnahmen entweicht. Da die Reaktionsmischung aufschäumen kann, ist es bevorzugt, dass die Öffnungen kopfseitig vorgesehen sind. Beispielsweise können die Öffnungen dabei schlitzförmig ausgebildet sein, wobei die Schlitze noch von seitlich aufragenden Wänden umgeben sein können, die vom Extruder nach oben hin aufragen. In diesem Fall ist eine nicht allzu starke Schaumbildung im Extruder unproblematisch handhabbar, weil sich der Schaum noch innerhalb der Wände sammeln kann, ohne dass ein Überquellen aus dem Extruder erfolgt.

Die zumindest eine Carbonsäure wird bevorzugt flüssig in den Extruder zugeführt. Die Carbonsäure kann dabei mit einer Temperatur von mehr als 75 °C, bevorzugt mehr als 80 °C, insbesondere mehr als 80 °C bis zu 150 °C, in den Extruder zugeführt werden. Höhere Temperaturen ermöglichen, dass die Reaktion möglichst effizient im Sinne einer vollständigen Umsetzung entlang einer kurzen Strecke des Extruders erfolgen kann.

Um eine Umsetzung der Carbonsäure mit dem Metallhydroxid und/oder dem Metalloxid und/oder dem Metallcarbonat und/oder einer anderen Metallverbindung zu initiieren bzw. rascher ablaufen zu lassen, wird bevorzugt ein Katalysator zugeführt. Hierfür ist es zweckmäßig, dass der Katalysator mit der Carbonsäure oder mit Metallhydroxid und/oder Metalloxid und/oder Metallcarbonat in den Extruder zugeführt wird. Wird die Carbonsäure mit einem Metallhydroxid und gegebenenfalls oder alternativ auch einem Metalloxid zuerst zugeführt, können die beiden Komponenten bereits zumindest teilweise miteinander vermischt werden. Die danach stromabwärts folgende Zudosierung des Katalysators fördert dann einen raschen Reaktionsablauf. Dabei kann ein Gehalt an Katalysator relativ gering gehalten werden. Bevorzugt wird ein Gewichtsverhältnis von Carbonsäure zu Katalysator im Bereich von mehr als 0 bis 50, vorzugsweise 20 bis 45 gewählt.

Als Katalysatoren sind im Rahmen der Erfindung Stoffe zu verstehen, die mit passivierten Oberflächen von Metallhydroxid und/oder Metalloxid und/oder Metallcarbonaten und/oder basischen Metallcarbonat-Partikeln reagieren und damit einerseits die Partikeloberflächen reaktiver machen und andererseits selbst mit den Carboxylaten durch Transfer des Kations weiter reagieren. Wasser, anorganische und organische Säuren, Säureanhydride, kurzkettige Carbonsäuren, kurzkettige Carboxylate oder dergleichen sind als Katalysatoren einsetzbar. Im Verlauf der Reaktion können Katalysatoren auch teilweise oder vollständig aus dem Prozess durch Verdampfen aus der Schmelze oder Mischung ausscheiden.

Günstig ist es, wenn die Umsetzung der Carbonsäure mit der Metallverbindung wie einem Metallhydroxid und/oder einem Metalloxid und/oder einem Metallcarbonat in mehreren hintereinander geschalteten Modulen des Extruders durchgeführt wird. Sind mehrere Module vorhanden, bieten sich mehrere Vorteile: Zum einen können die einzelnen Module gegebenenfalls zumindest teilweise gesondert temperiert werden, was eine gewünschte Temperatureinstellung entlang der Module und damit eine gezielte Beeinflussung der Reaktion ermöglicht. Zum anderen können zwischen den einzelnen Modulen nochmals Elemente zur besseren Dispergierung der Reaktionsmischung vorgesehen sein, insbesondere Dispergierringe oder dergleichen, was eine weitere innige Durchmischung fördert. In diesem Zusammenhang kann auch vorgesehen sein, dass stromabwärts weitere Metallverbindungen beigemengt werden. Eine sequenzielle Beimengung von insbesondere Metallhydroxiden und/oder Metalloxiden oder weiteren Carbonsäuren kann erforderlich sein, um die Viskosität der Reaktionsmischung gezielt steuern zu können. Ist aber eine Reaktion bereits zumindest teilweise erfolgt, können wie erwähnt weitere Metallverbindungen beigemengt werden. Darüber hinaus können in einzelnen Modulen auch unterschiedlich große Öffnungen bzw. Schlitze vorgesehen sein, was eine optimale Abstimmung des Entziehens bzw. Entweichens von Reaktionswasser in Bezug auf die jeweilige Position der Reaktionsmischung und damit einen bis dahin erfolgten Reaktionsumsatz ermöglicht. Insgesamt lassen sich somit optimale Bedingungen für die gewünschte Umsetzung der zumindest einen Carbonsäure mit der zumindest einen Metallverbindung finden.

Wie erwähnt kann vorgesehen sein, dass die Module zumindest teilweise gesondert temperiert werden. Dabei kann eine Temperatur der Module insbesondere so eingestellt werden, dass die Carbonsäure in flüssigem Zustand gehalten wird. Eine Temperatur der Module auf zumindest 50 °C, bevorzugt zumindest 120°C, vorzugsweise zumindest 140 °C, insbesondere 155 °C bis 250 °C, eingestellt werden. Dadurch kann auch bei längerkettigen Carbonsäuren gegebenenfalls eingestellt werden, dass diese während der Umsetzung in flüssigem Zustand bleiben. Gleichzeitig ist dadurch die Möglichkeit gegeben, die Reaktionsgeschwindigkeit und damit die Verweilzeit im Extruder über die Temperatur zu beeinflussen.

Es kann im Rahmen der Erfindung vorgesehen sein, dass die Umsetzung der Carbonsäure mit der zumindest einen Metallverbindung in mehreren hintereinandergeschalteten Modulen des Extruders durchgeführt wird und/oder in mehreren weiteren Modulen weitere Materialien in die Stabilisatorzusammensetzung eingearbeitet werden.

Weitere Materialien können (Co-)Stabilisatoren, Gleitmittel, Füllstoffe, Antioxidantien, Lichtschutzmittel, Pigmente, Fließhilfen, Schlagzähmodifikatoren und andere Acrylat-Derivate und /oder Polymere sein, wie sie aus dem Stand der Technik oder aus der Fachliteratur bekannt sind.

Unter (Co-)Stabilisatoren sind zum Beispiel organische Stabilisatoren wie Harnstoff und dessen Derviate, Aminocrotonate und deren Derivate, Uracile und deren Derivate, Thioester, Glycidylverbindungen, Amine, Amide, Aminosäuren und deren Derivate, Epoxyverbindungen, Beta-Diketone, Di- und Polyhydropyridine, Polyole, Isocyanurate, Polyalkylpiperidine, Schichtgitterverbindungen (LDHs), (Erd-)Alkalialumosilikate, Alkalialumocarbonate und dergleichen zu verstehen. Unter Gleitmitteln sind zum Beispiel Kohlenwasserstoff-Wachse (PE-Wachse, PP-Wachse, Paraffine, FT-Paraffine und dergleichen), Esterwachse und Komplexester, Ketone und/oder Alkohole und/oder Amine der Fettsäuren, Chlorparaffine, Silikone, Polysiloxane, Kamm-Co-Polymere, Polyester, Polyamine und dergleichen zu verstehen. Unter Füllstoffen sind zum Beispiel Carbonate, Calcite, Dolomite, Talkum, Kaoline, Alumosalzverbindungen und dergleichen zu verstehen.

Ist die Reaktion der Carbonsäure mit dem Metallhydroxid und/oder dem Metalloxid abgeschlossen und kein oder nur mehr ein vorbestimmter Reaktionswassergehalt vorhanden, können weitere Komponenten für die Zusammensetzung des Stabilisators eingearbeitet werden. Hierfür sind bevorzugt mehrere weitere Module vorgesehen. Diese weiteren Module können ebenfalls zumindest teilweise gesondert voneinander temperiert werden. Dadurch ist es möglich, bei geregelten Temperaturen bestimmte weitere flüssige oder bevorzugt feste Komponenten einzuarbeiten. Somit können mit dem Verfahren auch temperaturempfindliche Komponenten im weiteren Verlauf des Prozesses in einem stromabwärts betrachtet weiter hinten positionierten Modul eingearbeitet werden.

Möglich wäre es, dass einzelne Komponenten in (meist) unerwünschten Querreaktionen miteinander reagieren. Hier bietet das Verfahren dann durch die Möglichkeit der bereichsweisen Einstellung der Temperatur Vorteile, da entsprechende Reaktionen durch niedrige Temperaturen unterbunden werden können.

Für eine effiziente Verfahrensführung ist es von Vorteil, wenn ein oder mehrere Fördermittel in den mehreren Modulen und/oder den weiteren Modulen über einen einzelnen Motor abgetrieben werden. Grundsätzlich können im Rahmen der Erfindung beliebige Extruder eingesetzt werden, solange Aussparungen oder dergleichen vorgesehen sind, über welche Reaktionswasser in einem ersten Extruderabschnitt entweichen kann. Bei dem Fördermittel kann es sich beispielsweise um eine Schnecke handeln, wenn ein Schneckenextruder vorgesehen ist. Die einzelnen Module werden dann um die einzelne Schnecke, die von einem einzigen Motor angetrieben wird, herum angeordnet. Besonders bevorzugt ist es jedoch, dass ein Planetwalzenextruder eingesetzt wird. Ein Planetwalzenextruder bietet den Vorteil, dass das zu verarbeitende bzw. abreagierende Material nicht nur besonders innig vermischt, sondern auch in sehr dünne Schichten aufgeteilt und in dieser Form durchmischt wird. Dies bringt für eine hohe Güte der erzeugten Stabilisatorzusammensetzung Vorteile, weil das zunächst erzeugte Metallcarboxylat und die danach eingearbeiteten Hilfsstoffe bzw. zusätzlichen Komponenten besonders fein miteinander vermischt werden, was zu einer homogenen, feinen Verteilung der eingearbeiteten Komponenten führt. Dies ist in Batch-Verfahren in dieser Güte nicht möglich.

Für die gewünscht hohe Homogenität des Stabilisators, der beispielsweise als Strang abgenommen wird, können sich große lokale Temperaturdifferenzen im Extruder als nachteilig erweisen. Wird ein Planentenextruder eingesetzt, kann vorgesehen sein, dass eine Spindel des Planetwalzenextruders im Inneren teilweise oder durchgehend temperiert wird. Insbesondere wenn auch die Module temperiert werden, kann dadurch ein großer Temperaturgradient von einer Außenseite der Module zur Extruderachse hin vermieden werden.

Neben der Abnahme der hergestellten Stabilisatorzusammensetzung als Strang am Ende des Extruders ist es auch möglich, eine Granulation des aus dem Extruder ausfahrenden Materials bzw. der Stabilisatorzusammensetzung vorzunehmen. Eine entsprechende Granulation kann mit an sich bekannten Methoden des Standes der Technik erfolgen, wie beispielsweise in der DE 1 937 862 A beschrieben.

Eine Ausformung von Stabilisatorschmelzen unter Wasser, gegebenenfalls mit Ablängung, z. B. durch eine Lochdüse hindurch austretende Schmelzestränge, die nachfolgend auf eine vorbestimmte Länge abgeschnitten werden, ist gegenüber einer Abkühlung auf Kühlbändern, die grundsätzlich auch Anwendung finden können, bevorzugt.

Ein Vorteil bei einer Abkühlung einer Stabilisatorschmelze unter Wasser besteht darin, dass große Freiheiten hinsichtlich der Schmelzeviskosität gegeben sind. Die Viskosität der Schmelze kann für die nachfolgende Ausformung unter Wasser passend über eine Temperaturführung eingestellt werden. Dies erlaubt eine kompakte Bauweise bzw. einen geringen Platzbedarf einerseits und erbringt andererseits auch hohe Durchsätze. Im Vergleich zu Kühlbändern sind darüber hinaus die Investitionskosten relativ gering, da die Schmelzestränge über eine Lochscheibe extrudiert werden können.

Auf eine bestimmte Bauweise des Extruders kommt es nicht an. Es kann sich dabei um einen Planetwalzenextruder handeln, aber auch irgendeine andere Art eines Extruders, der endseitig mit einer Lochplatte versehen ist, beispielsweise ein Schneckenextruder mit einer oder zwei Schnecken. Eine Viskosität der Schmelze wird dabei so eingestellt, dass vor der Lochplatte ein ausreichender Druckaufbau gegeben ist, um nachfolgend einen sauberen Schnitt zu ermöglichen, wobei aber die Schmelze noch in geeigneter Weise förderbar ist. Beim Pressen der Schmelze durch die Lochscheibe kommt es dann zur Ausformung einzelner Schmelzestränge, welche durch ein oder mehrere rotierende Messer abgelängt werden. Das entstehende Granulat wird anschließend im Wasserstrom weitertransportiert und letztlich getrocknet.

Die Stabilisatorzusammensetzung wie vorstehend beschrieben ist bevorzugt eine sogenannte one-pack-Stabilisatorzusammensetzung, bedarf also keiner weiteren Hilfs- oder Zuschlagsstoffe, um sofort als Stabilisator insbesondere für halogenhaltige Polymere wie PVC eingesetzt zu werden.

Entsprechend den vorstehend dargestellten Vorteilen unterscheidet sich eine mit einem erfindungsgemäßen Verfahren hergestellte Stabilisatorzusammensetzung durch eine höhere Homogenität und Gleichmäßigkeit von im Batch-Verfahren hergestellten Stabilisatorzusammensetzungen. Dementsprechend wird das weitere Ziel durch eine erfindungsgemäß hergestellte Stabilisatorzusammensetzung erreicht.

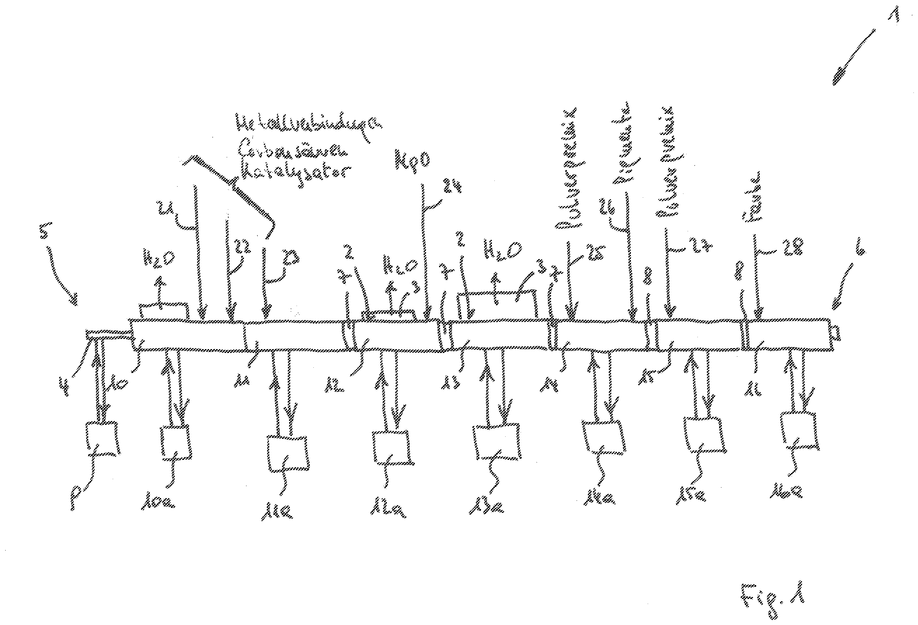

Weitere Merkmale, Vorteile und Wirkungen ergeben sich aus dem nachfolgend dargestellten Ausführungsbeispiel. In der Zeichnung, auf welche dabei Bezug genommen wird, zeigt Fig. 1 einen Planetwalzenextruder.

In Fig. 1 ist ein Extruder 1 dargestellt, der als Planetwalzenextruder ausgebildet ist. Der Planetenwalzextruder umfasst mehrere Module 11, 12, 13, 14, 15, 16. Die Module 11, 12, 13, 14, 15, 16 sind nacheinander angeordnet und erlauben einen durchgängigen Materialfluss im Extruder 1. Jedes der Module 11, 12, 13, 14, 15, 16 ist mit einem Heiz-/Kühlkreislauf 11a, 12a, 13a, 14a, 15a, 16a verbunden. Bei den entsprechenden Kreisläufen handelt es sich um solche, die mit Öl oder Wasser oder einem sonstigen Medium betrieben werden. Ein Ölbetrieb erlaubt eine maximale Temperatur von bis zu 300 °C und ist für die Module 11, 12, 13, 14, 15 vorgesehen. Ein Wasserbetrieb erlaubt eine maximale Temperatur von 220 °C. Für das Modul 16 wird der Kreislauf mit Wasser betrieben. Wenngleich nicht dargestellt, kann auch vorgesehen sein, dass einzelne der Module 11, 12, 13, 14, 15, 16 jeweils durch einen Kreislauf gemeinsam betrieben werden. Dies bietet sich beispielsweise für die Module 13, 14 an, in welchen etwa mit derselben Temperatur gefahren werden kann.

Es kann wie in Fig. 1 dargestellt zusätzlich ein Füllteil 10 vorgesehen sein, in den zumindest eine Carbonsäure, insbesondere eine Fettsäure, sowie zumindest ein Metallhydroxid und/oder zumindest ein Metalloxid und/oder zumindest ein Metallcarbonlat und/oder zumindest ein basisches Metallcarbonat zugeführt und gemischt werden. Grundsätzlich könnten diese Komponenten aber auch sogleich in das erste Modul 11 eindosiert werden. Für den Füllteil 10 ist ein eigener Heiz-/Kühlkreislauf 10a vorgesehen.

Der Extruder 1 wird von einer zentralen Spindel 4 durchsetzt, die von einem Motor 3 angetrieben wird. Die Spindel 4 läuft durch den Füllteil 10 und alle Module 11, 12, 13, 14, 15, 16 des Extruders 1. Da es sich um einen Planetwalzenextruder handelt, ist die Spindel 4 von Planetenspindeln umgeben, die mit einer Innenseite jedes der Module 11, 12, 13, 14, 15, 16 verzahnen. In Betrieb kann durch eine entsprechende Schrägverzahnung sichergestellt werden, dass das Material nach Einfüllen in den Extruder 1 stromabwärts vorwärtsgetrieben wird, sodass das Material letztlich an einem einem vorderen Ende 5 des Extruders 1 gegenüberliegenden hinteren Ende 6 des Extruders 1 austreten kann.

An den Modulen 11, 12, 13 können stromabwärts Dispergierscheiben 7 oder andere Mittel zur Verteilung von Masse in eine nachfolgende Einheit vorgesehen sein. Bei den weiteren Modulen 14, 15 kann ein Entgasungsring 8 stromabwärts nachgeschaltet sein. Die Spindel 4 kann innenliegend ebenfalls temperiert werden, wofür ein eigener Kreislauf 9 vorgesehen ist, der beispielsweise mit Öl bis zu einer Temperatur von 300 °C betreibbar ist. Dadurch können starke Temperaturgradienten zwischen einer Außenseite des Extruders 1 bzw. noch präziser ausgedrückt der Innenseite der Module 11, 12, 13, 14, 15, 16 und der Spindel 4 vermieden werden. Mit anderen Worten: Temperaturinhomogenitäten im Extruder 1 können weitgehend vermieden werden.

Für die Zuführung von Material zur Herstellung einer Stabilisatorzusammensetzung sind geeignete Zuführungen 21, 22, 23, 24, 25, 26, 27, 28 vorgesehen. Des Weiteren sind am Extruder 1 seitlich, insbesondere wie dargestellt kopfseitig bzw. an einem vertikal oberen Bereich Öffnungen 2 vorgesehen. Die Öffnungen 2 können schlitzförmig ausgebildet sein und sind seitlich von aufragenden Wänden 3 umgeben. Durch diese Schlitze bzw. Öffnungen 2 kann bei einer Reaktion der zuvor aufgegebenen Carbonsäuren mit den Metallverbindungen entstehendes Reaktionswasser entweichen. Möglich ist es auch, dass dieses Entweichen von Reaktionswasser aktiv gefördert wird, beispielsweise durch Abzug mittels einer Pumpe. Grundsätzlich kann allerdings eine entsprechende Verfahrensführung bei geeigneter Auslegung der Module 11, 12, 13 unterbleiben. Auch zur Vermeidung einer Schaumbildung ist es zweckmäßig, wenn das Reaktionswasser von selbst bzw. ohne unterstützende Maßnahme entweicht.

Eine Umsetzung der zumindest einen Carbonsäure mit dem zumindest einen Metallhydroxyd und/oder dem zumindest einem Metalloxid erfolgt in den Modulen 11, 12, 13, welche quasi eine Kesselkaskade darstellen. Am Ende des Moduls 13 ist das entstandene Reaktionswasser entweder vollständig entwichen oder zumindest auf einen gewünschten Gehalt reduziert. Am Ende des Moduls 13 kann eine Temperatur der dann noch flüssigen Masse etwa 200 °C bis 250 °C betragen. Dieses Modul 13 kann ausschließlich für die Entweichung von Reaktionswasser vorgesehen sein. Die Wände 3 können in diesem Fall höher gestaltet sein als jene am Modul 12. Anschließend tritt diese Masse durch einen letzten der Dispergierringe 7 in das Modul 14 über. In diesem Modul 14 ist das verarbeitete Material nach wie vor flüssig bzw. liegt als Schmelze vor. Es können nun über die Zuführung 26 flüssige Komponenten, vorgemischte Pulver und/oder Pigmente eingebracht werden. Eine Temperatur kann hierbei etwa 40 °C bis 200 °C betragen. Im nachfolgenden Modul 15 können wiederum über eine Zuführung 27 weitere Komponenten, beispielsweise Zeolithe, Kreide oder Co-Stabilisatoren beigemengt werden. Da die Temperatur in diesem Bereich bereits deutlich niedriger ist, weist die verarbeitete Masse bzw. das im Extruder 1 vorwärtsgetriebene Material an dieser Stelle bereits eine pastöse, deutlich höher viskose Konsistenz auf. Im Modul 16, das mit Wasser beheizt wird, erfolgt schließlich bei relativ moderaten Temperaturen von 30 °C bis 130 °C eine Beimengung von thermisch empfindlichen Stoffen über eine weitere Zuleitung 28, beispielsweise ausgesuchte Rohstoffen und/oder Farben. Die Zuleitung 28 ist wie die übrigen Zuleitungen 21, 22, 23, 24, 25, 26, 27 mit geeigneten Dosiermitteln, z. B. eine Waage oder eine Dosierpumpe, ausgestattet.

Es kann vorgesehen sein, dass mehrere der Module 11, 12, 13, 14, 15, 16 auch zu einem einzelnen Modul kombiniert werden können. Beispielsweise können die Module 11, 12, 13 zu einem oder zwei Modulen kombiniert werden. Analoges gilt für die Module 14, 15, 16. Die Anzahl der Module 11, 12, 13, 14, 15, 16 beträgt mindestens zwei, insbesondere drei oder mehr, ist nach oben hin aber nicht limitiert.

Schließlich tritt die so hergestellte Stabilisatorzusammensetzung am stromabwärts angeordneten Ende des Extruders 1 aus diesem aus. Das strangförmige Material der Stabilisatorzusammensetzung kann dabei als solche bzw. als Strang abgenommen werden. Möglich ist es auch, dass eine Granulation des so erstellten Materials nachgeschaltet ist. Danach richtet sich auch die Temperatur im Modul 16. Für eine Abnahme als Strang sind in der Regel niedrigere Temperaturen im Bereich von 30 °C bis 80 °C ausreichend. Soll granuliert bzw. Tabletten hergestellt werden, liegt die Temperatur höher im Bereich von etwa 110 °C bis 140 °C.

Optional können auch noch Sicherheitseinrichtungen wie Siebe oder Magnetabscheider an das Ende des Extruders 1 angebracht werden um etwaige Kontaminationen der fertigen Stabilisatorzusammensetzung abzufangen. Diese Einrichtungen können aber auch an einzelnen der oder allen Zuführungen 21, 22, 23, 24, 25, 26, 27, 28 installiert werden.

In den nachstehenden Tabellen 1 und 2 sind typische Parameter zur Herstellung einer Stabilisatorzusammensetzung mit einem Extruder 1 der vorstehend beschriebenen Art dargestellt.

**Tabelle 1 - Zusammensetzung für Stabilisatorzusammensetzung**

| **Komponente** | **Zusammensetzung [%]** |
|---|---|
| Stearinsäure flüssig (100 °C) | 27,8 |
| Calciumhydroxid Ca(OH)₂ | 3,9 |
| Zinkoxid ZnO | 1,3 |
| Katalysator (H₂O) | 1,7 |
| Paraffinwachs (Tropfpunkt 55 °C bis 77 °C) | 5,5 |
| Dilaurylthiodipropionat | 4,6 |
| Antioxidans (Irganox 1076) | 4,9 |
| Alcamizer P93 (Kisuma) | 50,3 |
| Summe | 100 |

**Tabelle 2 - Temperatureinstellung**

| **Anlagenteil** | **Temperatur [°C]** |
|---|---|
| Spindel 4 | 160 |
| Füllteil 10 | passiv* |
| Modul 11 | 180 |
| Modul 12 | 160 |
| Modul 13 | 160 |
| Modul 14 | 120 |
| Modul 15 | 60 |
| Modul 16 | passiv* |

| | |
|---|---|
| * passiv bedeutet, dass der entsprechende Heiz-/Kühlkreislauf nicht aktiviert ist | |

Eine entsprechend Tabelle 1 und 2 hergestellte Stabilisatorzusammensetzung lässt sich nicht nur in großen Mengen in kurzer Zeit als abzulängendes Stangenmaterial oder Granulat produzieren, sondern weist aufgrund der abgestimmten Verfahrensbedingungen und der Extrusion über einen Planetwalzenextruder auch eine hohe Homogenität und Güte bei vorbestimmtem und reproduzierbarem Wassergehalt auf.

## Patentansprüche

1. Verfahren zur Herstellung einer Stabilisatorzusammensetzung für ein Polymer, wobei zumindest eine Carbonsäure mit zumindest einer Metallverbindung wie zumindest einem Metallhydroxid und/oder zumindest einem Metalloxid und/oder zumindest einem Metallcarbonat unter Bildung eines Metallcarboxylates der Carbonsäure umgesetzt wird, **dadurch gekennzeichnet, dass** die Umsetzung der Carbonsäure mit der Metallverbindung kontinuierlich in einem Extruder (1) unter Austritt von entstehendem Reaktionswasser aus dem Extruder (1) durchgeführt wird.

2. Verfahren nach Anspruch 1, **dadurch gekennzeichnet, dass** das Reaktionswasser entweichen gelassen wird.

3. Verfahren nach Anspruch 1 oder 2, **dadurch gekennzeichnet, dass** der Austritt des Reaktionswassers durch Öffnungen (2), insbesondere kopfseitige Öffnungen (2), des Extruders (1) erfolgt.

4. Verfahren nach einem der Ansprüche 1 bis 3, **dadurch gekennzeichnet, dass** die Carbonsäure flüssig in den Extruder (1) zugeführt wird.

5. Verfahren nach Anspruch 4, **dadurch gekennzeichnet, dass** die Carbonsäure mit einer Temperatur von mehr als 75 °C, bevorzugt mehr als 80 °C, insbesondere mehr als 80 °C bis zu 150 °C, in den Extruder (1) zugeführt wird.

6. Verfahren nach einem der Ansprüche 1 bis 5, **dadurch gekennzeichnet, dass** zur Umsetzung der Carbonsäure mit der Metallverbindung ein Katalysator zugeführt wird.

7. Verfahren nach Anspruch 6, **dadurch gekennzeichnet, dass** ein Gewichtverhältnis von Carbonsäure zu Katalysator im Bereich von mehr als 0 bis 50, vorzugsweise 20 bis 45, gewählt wird.

8. Verfahren nach einem der Ansprüche 1 bis 7, **dadurch gekennzeichnet, dass** die Umsetzung der Carbonsäure mit der Metallverbindung in mehreren hintereinandergeschalteten Modulen (11, 12, 13) des Extruders (1) durchgeführt wird.

9. Verfahren nach Anspruch 8, **dadurch gekennzeichnet, dass** die Module (11, 12, 13) zumindest teilweise gesondert temperiert werden.

10. Verfahren nach Anspruch 8 oder 9, **dadurch gekennzeichnet, dass** eine Temperatur der Module (11, 12, 13) so eingestellt wird, dass die Carbonsäure in flüssigem Zustand gehalten wird.

11. Verfahren nach einem der Ansprüche 8 bis 10, **dadurch gekennzeichnet, dass** eine Temperatur der Module (11, 12, 13) auf zumindest 50 °C, bevorzugt zumindest 120 °C, vorzugsweise zumindest 140 °C, insbesondere 155 °C bis 250 °C, eingestellt wird.

12. Verfahren nach einem der Ansprüche 1 bis 11, **dadurch gekennzeichnet, dass** die Umsetzung der Carbonsäure mit der Metallverbindung in mehreren hintereinandergeschalteten Modulen (11, 12, 13) des Extruders (1) durchgeführt wird und/oder in einem oder mehreren weiteren Modulen (14, 15, 16) weitere Materialien, insbesondere Feststoffe, in die Stabilisatorzusammensetzung eingearbeitet werden.

13. Verfahren nach Anspruch 12, **dadurch gekennzeichnet, dass** die weiteren Module (14, 15, 16) zumindest teilweise gesondert voneinander temperiert werden.

14. Verfahren nach einem der Ansprüche 9 bis 13, **dadurch gekennzeichnet, dass** ein oder mehrere Fördermittel in den mehreren Modulen (11, 12, 13) und/oder den weiteren Modulen (14, 15, 16) über einen einzelnen Motor (3) angetrieben werden.

15. Verfahren nach einem der Ansprüche 1 bis 14, **dadurch gekennzeichnet, dass** ein Planetenwalzextruder eingesetzt wird.

16. Verfahren nach Anspruch 15, **dadurch gekennzeichnet, dass** eine zentrale Spindel (4) des Planetwalzenextruders im Inneren temperiert wird.

17. Verfahren nach einem der Ansprüche 1 bis 16, **dadurch gekennzeichnet, dass** die Stabilisatorzusammensetzung als Strang aus dem Extruder abgenommen wird.

18. Verfahren nach einem der Ansprüche 1 bis 17, **dadurch gekennzeichnet, dass** die Stabilisatorzusammensetzung granuliert wird, insbesondere unter Wasser granuliert wird.

19. Stabilisatorzusammensetzung, erhältlich nach einem der Ansprüche 1 bis 18.

## Claims

1. Method for producing a stabiliser composition for a polymer, wherein at least one carboxylic acid is reacted with at least one metal compound such as at least one metal hydroxide and/or at least one metal oxide and/or at least one metal carbonate to form a metal carboxylate of the carboxylic acid, **characterized in that** the reaction of the carboxylic acid with the metal compound is carried out in a continuous manner in an extruder (1), and the reaction water being formed is discharged from the extruder (1).

2. Method according to claim 1, **characterized in that** the reaction water is allowed to escape.

3. Method according to claim 1 or 2, **characterized in that** the discharge of the reaction water takes place through openings (2) in the extruder (1), in particular openings (2) at the head end thereof.

4. Method according to any one of claims 1 to 3, **characterized in that** the carboxylic acid is fed into the extruder (1) in liquid form.

5. Method according to claim 4, **characterized in that** the carboxylic acid is fed into the extruder (1) at a temperature of more than 75°C, preferably more than 80°C, in particular more than 80°C up to 150°C.

6. Method according to any one of claims 1 to 5, **characterized in that** a catalyst is supplied for reacting the carboxylic acid with the metal compound.

7. Method according to claim 6, **characterized in that** a weight ratio of carboxylic acid to catalyst is selected in the range from more than 0 to 50, preferably 20 to 45.

8. Method according to any one of claims 1 to 7, **characterized in that** the reaction of the carboxylic acid with the metal compound is carried out in multiple cascaded modules (11, 12, 13) of the extruder (1).

9. Method according to claim 8, **characterized in that** the modules (11, 12, 13) are temperature-controlled at least partly separately.

10. Method according to claim 8 or 9, **characterized in that** a temperature of the modules (11, 12, 13) is set such that the carboxylic acid is kept in a liquid state.

11. Method according to any one of claims 8 to 10, **characterized in that** a temperature of the modules (11, 12, 13) is set to at least 50°C, preferably at least 120°C, more preferably at least 140°C, in particular 155°C to 250°C.

12. Method according to any one of claims 1 to 11, **characterized in that** the reaction of the carboxylic acid with the metal compound is carried out in multiple cascaded modules (11, 12, 13) of the extruder (1) and/or that additional materials, in particular solids, are incorporated into the stabiliser composition in one or more further modules (14, 15, 16).

13. Method according to claim 12, **characterized in that** the further modules (14, 15, 16) are temperature-controlled at least partly separately from one another.

14. Method according to any one of claims 9 to 13, **characterized in that** one or more conveying means in the multiple modules (11, 12, 13) and/or in the further modules (14, 15, 16) are driven via a single motor (3).

15. Method according to any one of claims 1 to 14, **characterized in that** a planetary roller extruder is used.

16. Method according to claim 15, **characterized in that** the central spindle (4) of the planetary roller extruder is internally temperature controlled.

17. Method according to any one of claims 1 to 16, **characterized in that** the stabiliser composition is removed from the extruder as a strand.

18. Method according to any one of claims 1 to 17, **characterized in that** the stabiliser composition is granulated and granulation takes place in particular under water.

19. Stabiliser composition, obtained according to any one of claims 1 to 18.

## Revendications

1. Procédé de préparation d'une composition stabilisante pour un polymère, consistant à faire réagir au moins un acide carboxylique avec au moins un composé métallique tel qu'au moins un hydroxyde de métallique et/ou au moins un oxyde métallique et/ou au moins un carbonate métallique pour ainsi former un carboxylate métallique de l'acide carboxylique, **caractérisé en ce que** la réaction de l'acide carboxylique avec le composé métallique est réalisée de manière continue dans une extrudeuse (1) alors que l'eau issue de ladite réaction est évacuée de l'extrudeuse (1) dès qu'elle se forme.

2. Procédé selon la revendication 1, **caractérisé en ce que** l'on laisse s'échapper l'eau issue de la réaction.

3. Procédé selon les revendications 1 ou 2, **caractérisé en ce que** l'eau issue de la réaction est évacuée par des ouvertures (2), s'agissant notamment d'ouvertures (2) situées côté tête, que comporte l'extrudeuse (1).

4. Procédé selon l'une des revendications 1 à 3, **caractérisé en ce que** l'acide carboxylique est introduit dans l'extrudeuse (1) à l'état liquide.

5. Procédé selon la revendication 4, **caractérisé en ce que** l'acide carboxylique est introduit dans l'extrudeuse (1) à une température supérieure à 75°C, de préférence supérieure à 80 °C, notamment supérieure à 80 °C et pouvant atteindre jusqu'à 150 °C.

6. Procédé selon l'une des revendications 1 à 5, **caractérisé en ce que** l'on introduit un catalyseur pour faire réagir l'acide carboxylique avec le composé métallique.

7. Procédé selon la revendication 6, **caractérisé en ce que** l'on choisit le rapport pondéral entre l'acide carboxylique et le catalyseur tel qu'il est compris entre 0 et 50, de préférence 20 et 45.

8. Procédé selon l'une des revendications 1 à 7, **caractérisé en ce que** la réaction entre l'acide carboxylique et le composé métallique est réalisée dans plusieurs modules (11, 12, 13) disposés successivement que comporte l'extrudeuse (1).

9. Procédé selon la revendication 8, **caractérisé en ce que** les modules (11, 12, 13) sont, au moins partiellement, mis en température séparément.

10. Procédé selon les revendications 8 ou 9, **caractérisé en ce que** la température des modules (11, 12, 13) est réglée telle que l'acide carboxylique est maintenu à son état liquide.

11. Procédé selon l'une des revendications 8 à 10, **caractérisé en ce que** la température des modules (11, 12, 13) est réglée à au moins 50 °C, de préférence au moins 120 °C, préférentiellement au moins 140 °C, notamment entre 155 °C et 250 °C.

12. Procédé selon l'une des revendications 1 à 11, **caractérisé en ce que** l'on réalise la réaction de l'acide carboxylique avec le composé métallique dans plusieurs modules (11, 12, 13) disposés successivement que comporte l'extrudeuse (1) et/ou on incorpore, dans un ou plusieurs modules supplémentaires (14, 15, 16), d'autres matériaux, s'agissant notamment de matières solide, à ladite composition stabilisante.

13. Procédé selon la revendication 12, **caractérisé en ce que** les modules supplémentaires (14, 15, 16) sont, au moins partiellement, mis en température séparément les un des autres.

14. Procédé selon l'une des revendications 9 à 13, **caractérisé en ce qu'**un ou plusieurs moyens de transport, situés dans les plusieurs modules (11, 12, 13) et/ou les modules supplémentaires (14, 15, 16), sont entraînés par un seul moteur (3).

15. Procédé selon l'une des revendications 1 à 14, **caractérisé en ce que** l'on met en œuvre une extrudeuse à cylindres planétaires.

16. Procédé selon la revendication 15, **caractérisé en ce que** l'on met en température l'intétieur d'une broche centrale (4) de l'extrudeuse à cylindres planétaires.

17. Procédé selon l'une des revendications 1 à 16, **caractérisé en ce que**, depuis l'extrudeuse, on récupère la composition stabilisante sous forme d'un brin.

18. Procédé selon l'une des revendications 1 à 17, **caractérisé en ce que** la composition stabilisante subit une granulation, notamment une granulation sous l'eau.

19. Composition stabilisante pouvant être obtenue selon l'une des revendications 1 à 18.
